**Europäisches Patentamt**

**European Patent Office**

**Office européen des brevets**

(19)

(11) **EP 1 174 394 A2**

(12) **EUROPÄISCHE PATENTANMELDUNG**

(43) Veröffentlichungstag:
   **23.01.2002 Patentblatt 2002/04**

(51) Int Cl.⁷: **C02F 1/465**, B01D 21/00

(21) Anmeldenummer: **01117260.8**

(22) Anmeldetag: **17.07.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **21.07.2000 DE 10035535**

(71) Anmelder: **ADER Abwasser Anlagen AG**
   **76646 Bruchsal (DE)**

(72) Erfinder: **Holger, Rüdiger Beaujean**
   **76646 Bruchsal (DE)**

(74) Vertreter: **Lasch, Hartmut Dipl.-Ing.**
   **Patentanwälte, Dipl.-Ing. Heiner Lichti,**
   **Dipl.-Phys.Dr. rer. nat Jost Lempert, Dipl.-Ing.**
   **Hartmut Lasch, Postfach 41 07 60**
   **76207 Karlsruhe (DE)**

(54) **Verfahren und Vorrichtung zur Reinigung von Abwässern**

(57)   Es wird ein Verfahren und eine Vorrichtung zur Reinigung von Abwässern vorgeschlagen, wobei das Abwasser durch Elektroflotation unter Verwendung von Elektroden aus Metall, die durch anodische Auflösung Metallionen freisetzen, vorgereinigt wird. Erfindungsgemäß werden die flotierten Partikel von anhaftenden Gasbläschen befreit und durch Eintrag von Scherkräften in dem vorgereinigten Abwasser suspendiert, wobei die bei der Elektroflotation in Lösung gegangenen Metallionen durch Einstellen eines basischen pH-Wertes im wesentlichen vollständig in nicht oder schwer lösliche Hydroxide überführt und ausgefällt und die hierbei gebildeten Flocken anschließend abgetrennt werden. Eine Vorrichtung zur Durchführung eines solchen Verfahrens ist mit einem einem Elektroden aus Metall aufweisenden Elektroflotationsreaktor nachgeschalteten Reaktor mit einem Rührwerk, einer Einrichtung zur Messung des pH-Wertes und einer Dosiereinrichtung, insbesondere zum Dosieren von Basen, ausgestattet, der mit dem Elektroflotationsreaktor über oberhalb seines Flüssigkeitsspiegels angeordnete Leitbleche verbunden ist.

EP 1 174 394 A2

**Beschreibung**

Die Erfindung betrifft ein Verfahren zur Reinigung von Abwässern, wobei das Abwasser durch Elektroflotation unter Verwendung von Elektroden aus Metall, die durch anodische Auflösung Metallionen freisetzen, vorgereinigt wird, und eine Vorrichtung zur Durchführung eines solchen Verfahrens mit einem Elektroden aus Metall aufweisenden Elektroflotationsreaktor.

Zur Reinigung von Abwässern werden verbreitet Flotationsverfahren eingesetzt, bei denen ungelöste Wasserinhaltsstoffe mittels feiner Gasbläschen an die Oberfläche des Abwassers aufgetrieben und als Schwimmschlamm abgetrennt werden. Bei der Elektroflotation erfolgt die Erzeugung der Gasbläschen durch Elektrolyse, wobei entweder ein Teil des Wassers elektrolytisch in Wasserstoff und Sauerstoff gespalten wird, oder es werden Elektroden aus Metall eingesetzt, die durch anodische Auflösung nach Art von Opferelektroden Metallionen freisetzen, so daß an der Anode stets Metall in Lösung geht (Gleichung 1) und an der Kathode Wasserstoff gebildet wird (Gleichung 2).

$$Me \rightarrow Me^{n+} + n\,e^{-} \qquad (1)$$

$$n\,e^{-} + n\,H_2O \rightarrow n\,OH^{-} + 0{,}5n\,H_2 \qquad (2)$$

Hieraus resultiert die Gesamtreaktion:

$$Me + n\,H_2O \rightarrow Me^{n+}\,n\,OH^{-} + 0{,}5n\,H_2 \qquad (3)$$

Wie aus Gleichung (2) ersichtlich, wird während der Elektroflotation an der Kathode nicht nur gasförmiger Wasserstoff in Form feiner Bläschen erzeugt, sondern es werden auch Hydroxyionen gebildet, so daß der pH-Wert des Abwassers angehoben wird und gegebenenfalls ein Teil des in Lösung gegangenen Metalls als schwerlösliches Hydroxid ausgefällt und flotiert wird.

Zur Reinigung von Abwässern ist ferner die Flockung bekannt, bei der unter Einsatz von Flockungsmitteln, wie Eisen- oder Aluminiumsalzen, und gegebenenfalls Flockungshilfsmitteln, z.B. organischen Polymeren, abtrennbare Flocken erzeugt werden. Der zur Flockenbildung führende Reaktionsmechanismus beruht einerseits auf der Reduktion der abstoßenden Kräfte zwischen suspendierten Teilchen und einer dadurch bedingten erhöhten Agglomerationsfähigkeit (Koagulation), andererseits auf einer Verknüpfung bzw. Vernetzung der suspendierten Teilchen (Flocculation). Die Flocken dienen dann zur Adsorption oder Chemisorption von gelösten Wasserinhaltsstoffen. Nachteilig ist insbesondere die Anreicherung des Abwassers mit den Anionen der als Flockungsmittel eingesetzten Metallsalze, die in der Regel nicht oder nur schwer abtrennbar sind.

Weiterhin ist es bekannt, die Flotation mit der Flockung derart zu kombinieren, daß die bei letzterer erzeugten Flocken anschließend flotiert und mechanisch, z.B. mittels Räumeinrichtungen, abgetrennt werden.

Der Erfindung liegt die Aufgabe zugrunde, ein Verfahren und eine Vorrichtung zur Reinigung von Abwässern vorzuschlagen, wobei insbesondere eine im wesentlichen vollständige Eliminierung von sowohl im Abwasser gelösten als auch suspendierten Schadstoffen unter Vermeidung einer Anreicherung von zur Abwasserreinigung zugesetzten Stoffen erzielt wird.

In verfahrenstechnischer Hinsicht wird diese Aufgabe erfindungsgemäß bei einem Verfahren der eingangs genannten Art dadurch gelöst, daß die flotierten Partikel von anhaftenden Gasbläschen befreit und durch Eintrag von Scherkräften in dem vorgereinigten Abwasser suspendiert werden, wobei die bei der Elektroflotation in Lösung gegangenen Metallionen durch Einstellen eines basischen pH-Wertes im wesentlichen vollständig in nicht oder schwer lösliche Hydroxide überführt und ausgefällt und die hierbei gebildeten Flocken anschließend abgetrennt werden.

Die Erfindung geht einen auf dem Gebiet der Flotationstechnik völlig neuen Weg, indem die mittels Elektroflotation flotierten Partikel nicht abgetrennt, sondern von den anhaftenden Gasbläschen befreit und in dem vorgereinigten Abwasser durch Eintrag von Schwerkräften, z.B. durch Rühren, suspendiert werden. Sie dienen hierbei einerseits zur Adsorption bzw. Chemisorption von Schadstoffen, andererseits als Keime zur Ausfällung von schwerlöslichen Metallhydroxiden des anodisch in Lösung gegangenen Metalls. Durch Einstellen eines basischen pH-Wertes, der sich insbesondere nach der Löslichkeit der Hydroxide des aus den Elektroden in Lösung gegangenen Metalls (Gleichung 1) richtet, ist es möglich, im wesentlichen das gesamte in Lösung gegangene Metall als Hydroxid unter Bildung von Flocken auszufällen, wobei ein Einsatz von Flockungsmittel, wie Metallsalzen, vermieden wird und somit eine Anreicherung von Anionen solcher Metallsalze im gereinigten Abwasser verhindert wird. Gleichzeitig wird der zur Einstellung eines zur Fällung schwerlöslicher Metallhydroxide erforderliche basische pH-Wert bereits durch die kathodische Bildung von Hydroxyionen (Gleichung 2) angehoben, was eine Einsparung der zu dosierenden Basen, z.B. Natronlauge oder dergleichen, ermöglicht.

In bevorzugter Ausführung werden die im wesentlichen senkrecht angeordneten Elektroden mit dem Abwasser bei der Elektroflotation von unten nach oben überströmt, wobei die Elektroden vorzugsweise laminar überströmt werden, was insbesondere durch Einstellen einer Strömungsgeschwindigkeit zwischen etwa 0,01 m/s und 0,001 m/s erzielt werden kann. Durch die senkrechte Anordnung der z. B. im wesentlichen plattenförmigen Elektroden gelangen die flotierten Partikel frei an die Oberfläche, so daß ein Verbleiben derselben zwischen den Elektroden zuverlässig vermieden wird. Durch die laminare Überströmung der Elektroden wird insbesondere sichergestellt, daß der pH-Wert im zu behandelnden Abwasser bereits während der Elektroflotation in Strömungsrichtung ansteigt und somit bereits während der Elektroflotation schwerlösliche Metallhydroxide durch Überschreiten des Löslichkeitsproduktes der in Lösung gegangenen Metallionen gebildet werden, die durch den kathodisch freigesetzten Wasserstoff zusammen mit den im Abwasser suspendierten Schadstoffen flotiert werden. Folglich werden bei der Elektroflotation im Abwasser enthaltene Schadstoffe physikalisch oder chemisch an den gebildeten Flocken schwerlöslicher Metallhydroxide adsorbiert und/oder flotierte Schadstoffpartikel bilden Kristallisationskeime zur Bildung der Flocken.

Vorzugsweise werden die Elektroden mit einer Spannung periodisch wechselnder Polarität beaufschlagt, um einerseits eine gleichmäßige Abnutzung derselben nach Art von Opferelektroden durch in Lösung gegangenes Metall zu gewährleisten, andererseits an den Elektroden anhaftende Beläge, z.B. Metallsulfide, abzulösen. So ist es insbesondere möglich, die Elektroden mit einer Gleichspannung mit periodisch wechselnder Polarität zu beaufschlagen. Die Elektroden werden je nach gewünschter Stromstärke zweckmäßig mit einer Spannung zwischen 3 V und 10 V beaufschlagt.

In bevorzugter Ausführung ist vorgesehen, daß der Abstand der Elektroden in Abhängigkeit von der Leitfähigkeit des Abwassers automatisch variiert wird. Auf diese Weise kann die gewünschte Stromstärke und somit die Menge des von den Elektroden in Lösung gehenden Metalls bzw. die Menge des freigesetzten Wasserstoffe automatisch konstant gehalten werden. Alternativ oder zusätzlich ist selbstverständlich möglich, die an den Elektroden anliegende Spannung in Abhängigkeit von der Leitfähigkeit des Abwassers automatisch zu variieren, um eine im wesentlichen konstante Stromstärke sicherzustellen.

Vorzugsweise werden Eisenelektroden eingesetzt, so daß gemäß nachfolgender Gleichung (4) an der Anode Eisen in Lösung geht, während an der Kathode unter Freisetzen von gasförmigem Wasserstoff Hydroxyionen gebildet werden (Gleichung (5)).

$$Fe \rightarrow Fe^{2+} + 2\,e^- \qquad (4)$$

$$2\,e^- + 2\,H_2O \rightarrow 2\,OH^- + H_2 \qquad (5)$$

Die Gesamtreaktion lautet folglich:

$$Fe + 2\,H_2O \rightarrow Fe^{2+} + 2\,OH^- + H_2 \qquad (6)$$

Beim Einsatz von Eisenelektroden ist insbesondere vorteilhaft, daß das von den Elektroden in Lösung gehende Eisen toxikologisch unbedenklich und in Form von schwerlöslichem Eisenhydroxid leicht abtrennbar ist. Ferner ist Eisen im Vergleich mit anderen Metallen, z. B. Aluminium, kostengünstig. Auch ist der Strombedarf 50% geringer als zum Beispiel beim Einsatz von Aluminium.

In bevorzugter Ausführung werden die den flotierten Partikeln anhaftenden Gasbläschen durch Überführen des vorgereinigten Abwassers mittels Leitblechen in einen einem Elektroflotationsreaktor nachgeschalteten Reaktor entfernt. Derart wird auf einfache Weise sichergestellt, daß die durch anhaftende Gasbläschen flotierten Partikel bzw. gegebenenfalls durch ausgefällte Metallhydroxide gebildeten Flocken sedimentiert werden, um sie durch Eintrag von Schwerkräften in dem nachgeschalteten Reaktor zu suspendieren.

Die flotierten Partikel können in dem dem Elektroflotationsreaktor nachgeschalteten Reaktor beispielsweise mittels Rühren suspendiert und die Flocken anschließend physikalisch von dem gereinigten Abwasser abgetrennt werden.

Insbesondere im Falle von Eisenelektroden ist mit Vorzug vorgesehen, daß zum Überführen der bei der Elektroflotation in Lösung gegangenen Metallionen in nicht oder schwerlösliche Hydroxide und Ausfällen derselben unter Bildung von Flocken in dem dem Elektroflotationsreaktor nachgeschalteten Reaktor ein pH-Wert zwischen 7,5 und 9,5 eingestellt wird. Somit kann das in Lösung gegangene Eisen im wesentlichen vollständig als schwerlösliches Eisenhydroxid unter Bildung von Flocken ausgefällt werden, wobei die Flocken zur Adsorption bzw. Chemisorption gelöster und suspendierter Wasserinhaltsstoffe dienen.

Das erfindungsgemäße Verfahren ist insbesondere zur Reinigung von solchen Abwässern geeignet, die emulgierte Öle, Fette oder sonstige emulgierte organische und/oder anorganische Stoffe, suspendierte Feststoffe, z.B. Polymere, Stäube, Mehle etc., oder Kolloide, wie Leim, Stärke oder dergleichen, enthalten. Es ist weiterhin insbesondere zur Entfernung gelöster Metalle und Schwermetalle, wie Eisen, Kupfer, Nickel, Chrom, Zink, Zinn, Blei, Quecksilber, Silber, Arsen, Antimon, Molybdän, Cadmium oder auch Calcium, Magnesium oder Aluminium geeignet. So ist beispielsweise eine Abtrennung von $Cr^{6+}$ aus Elektrolytlösungen für chemische Oberflächenbehandlungsverfahren, z.B. aus Galvanikabwässern, mit dem erfindungsgemäßen Verfahren ohne Zusatz von herkömmlichen Reduktionsmitteln, wie Natriumhydrogensulfid oder dergleichen, ohne weiteres möglich, indem die in dem Elektroflotationsreaktor in Lösung gegangenen Metallionen, z.B. $Fe^{2+}$, die $Cr^{6+}$-Ionen zu $Cr^{3+}$-Ionen reduzieren (Gleichung 7). Derart wird bei einem entsprechenden pH-Wert sowohl Eisen(III)hydroxid als auch Chrom(III)hydroxid ausgefällt bzw. letzteres in die Eisenhydroxidflocken eingelagert und ist somit abtrennbar.

$$3\ Fe^{2+} + Cr^{6+} \rightarrow 3\ Fe^{3+} + Cr^{3+} \qquad (7)$$

Das erfindungsgemäße Verfahren ist ferner für mit Farbstoffen, z.B. Tinte oder andere wasserlösliche Farben, und gelöste organische Stoffe, wie Detergentien, chlorierte und/oder aromatische Kohlenwasserstoffe enthaltende Abwässer geeignet, indem diese insbesondere an den Eisenhydroxidflocken adsorbiert werden. Weiterhin können Stickstoffverbindungen im wesentlichen vollständig aus dem Abwasser entfernt werden, indem Nitrite, Nitrate oder auch Amine zu Ammoniak reduziert werden, welcher durch Strippen in dem Elektroflotationsreaktor oder auch in diesem nachgeschalteten Reaktoren abgetrennt wird.

Eine Ausführungsvariante des erfindungsgemäßen Verfahrens sieht vor, daß bei der Elektroflotation eine in situ-Oxidation des Abwassers durch Zusetzen von Wasserstoffperoxid durchgeführt wird. In diesem Fall dient das Verfahren insbesondere zur Abtrennung oxidierbarer organischer Wasserinhaltsstoffe, wobei die in Lösung gehenden Eisenionen als Oxidationskatalysator wirken.

Das Verfahren wird vorzugsweise insbesondere kontinuierlich oder semikontinuierlich durchgeführt.

Eine Vorrichtung zur Reinigung von Abwässern mit einem Elektroden aus Metall aufweisenden Elektroflotationsreaktor ist dadurch gekennzeichnet, daß ein dem Elektroflotationsreaktor nachgeschalteter Reaktor wenigstens ein Rührwerk, eine Einrichtung zur Messung des pH-Wertes sowie wenigstens eine Dosiereinrichtung, insbesondere zum Dosieren von Basen, aufweist und daß der dem Elektroflotationsreaktor nachgeschaltete Reaktor über oberhalb seines Flüssigkeitsspiegels angeordnete Leitbleche mit dem Elektroflotationsreaktor verbunden ist, um die in letzterem flotierten Partikel sowie bereits ausgefällte Metallhydroxide unter Freisetzen der anhaftenden Gasbläschen in den nachgeschalteten Reaktoren zu überführen.

Der Elektroflotationsreaktor weist bevorzugt im wesentlichen senkrecht angeordnete Elektroden und einen im unteren Bereich oder unterhalb der Elektroden angeordneten Zulauf für das Abwasser auf, so daß eine kontinuierliche und insbesondere laminare Durchströmung des Elektroflotationsreaktors mit dem Abwasser möglich ist. Die Elektroden sind beispielsweise in Form von Platten im wesentlichen über die gesamte Länge und Breite des Elektroflotationsreaktors unter definierten Abständen angeordnet, wobei die Elektroden insbesondere Eisen enthalten oder gänzlich aus Eisen bestehen. Während der Elektroflotationsreaktor grundsätzlich eine Kathode und eine Anode aufweisen kann, ist zweckmäßig eine Serienanordnung von alternierend im Strömungsweg des Abwassers angeordneten Anoden bzw. Kathoden vorgesehen.

Um eine gleichmäßige Abnutzung der Elektroden zu gewährleisten und gegebenenfalls gebildete Beläge abzulösen, ist mit Vorzug eine Spannungsquelle mit periodisch wechselnder Polarität zur Beaufschlagung der Elektroden vorgesehen.

Im Zulauf und/oder im unteren Bereich des Elektroflotationsreaktors ist bevorzugt eine Leitfähigkeitsmeßeinrichtung vorgesehen, die insbesondere im Falle eines veränderbaren Abstands der Elektroden des Elektroflotationsreaktors mit einem Stellantrieb zum automatischen Einstellen des Elektrodenabstands in Abhängigkeit von der Leitfähigkeit des Abwassers korrespondiert. Eine Veränderbarkeit des Abstandes der Elektroden kann beispielsweise auf einfache Weise dadurch gewährleistet werden, daß die Elektroden in parallelen Führungen angeordnet sind, wobei die jeweils erste und letzte Elektrode gegen die Wandung des Elektroflotationsreaktors mittels Dichtleisten abgedichtet ist, so daß das Abwasser stets die Zwischenräume zwischen den Elektroden durchströmt. Alternativ oder zusätzlich kann die Leitfähigkeitsmeßeinrichtung auch mit der Spannungsquelle zur Beaufschlagung der Elektroden korrespondieren, um bei Abwässern mit verschiedener Leitfähigkeit eine im wesentlichen konstante Stromstärke zu gewährleisten.

Zur physikalischen Abtrennung der Flocken von dem gereinigten Abwasser ist in bevorzugter Ausführung ein an den dem Elektroflotationsreaktor nachgeschalteten Reaktor anschließender Separator vorgesehen, der beispielsweise mittels wenigstens eines Steigrohrs mit dem dem Elektroflotationsreaktor nachgeschalteten Reaktor verbunden ist.

Der Separator kann z.B. nach Art eine Absetzbeckens, eines Dekanters, insbesondere eines Lamellendekanters, einer Zentrifuge, eines Filters bzw. einer Filterpresse oder eines Hydrozyklons ausgebildet sein.

Nachstehend ist die Erfindung anhand eines Ausführungsbeispiels unter Bezugnahme auf die Zeichnungen näher erläutert. Dabei zeigen:

Fig. 1  eine schematische Schnittansicht einer Vorrichtung zur Reinigung von Abwässern gemäß A-A der Fig.2 und

Fig. 2  eine Draufsicht auf die Vorrichtung gemäß Fig. 1.

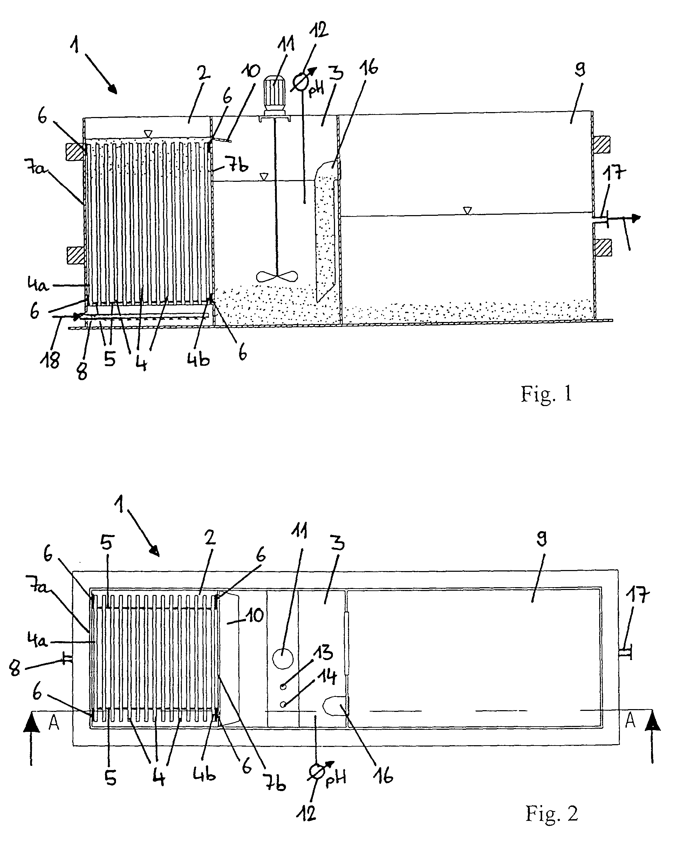

Die Vorrichtung 1 zur Reinigung von Abwässern umfaßt einen Elektroflotationsreaktor 2, einen diesem nachgeschalteten Reaktor 3 sowie einen an diesen anschließenden Separator 9. Der Elektroflotationsreaktor 1 ist mit senkrecht angeordneten plattenförmigen Elektroden 4, 4a, 4b aus Eisen ausgestattet, die an Führungen 5 gelagert sind und deren Abstand mittels eines Stellantriebs (nicht dargestellt) veränderbar ist. Sowohl die erste 4a als auch die letzte Elektrode 4b ist mittels flexibler Dichtlippen 6 gegen die Wandung 7a, 7b des Elektroflotationsreaktors 2 abgedichtet. Ein unterhalb der Elektroden 4 angeordneter Zulauf 8 für das zu reinigende Abwasser (Fig.1) ist mit einer Leitfähigkeits-

meßeinrichtung (nicht gezeigt) ausgestattet, die mit dem Stellantrieb der Elektroden 4, 4a, 4b korrespondiert, um den Elektrodenabstand in Abhängigkeit von der Leitfähigkeit des Abwassers zu verändern und eine konstante Stromstärke sicherzustellen. Die Leitfähigkeitsmeßeinrichtung kann zum gleichen Zweck mit einer Spannungsquelle (nicht dargestellt) mit stetig wechselnder Polarität zur Beaufschlagung jeweils benachbarter Elektroden 4, 4a, 4b mit einer verschiedenen Spannung korrespondieren.

Der dem Elektroflotationsreaktor 2 nachgeschaltete Reaktor 3 steht über ein oberhalb seines Flüssigkeitsspiegels angeordnetes Leitblech 10 mit dem Elektroflotationsreaktor 2 in Verbindung. Das Leitblech 10 ist nach Art einer schiefen Ebene ausgebildet und dient zum Entfernen der an den im Elektroflotationsreaktor 2 flotierten Partikel anhaftenden Gasbläschen, um die Partikel im Reaktor 3 zu suspendieren. Hierzu ist dieser mit einem Rührwerk 11 ausgestattet. Er ist ferner mit einer Einrichtung 12 zur Messung des pH-Wertes sowie jeweils mit einer Dosiereinrichtung 13, 14 zum Dosieren von Basen bzw. Säuren ausgestattet (Fig.2). Die Dosiereinrichtungen 13, 14 korrespondieren zweckmäßig mit der Einrichtung 12 zur Messung des pH-Wertes, um eine automatische Einstellung des gewünschten pH-Wertes zu gewährleisten.

An den Reaktor 3 schließt über ein Steigrohr 16 der in der gezeigten Ausführung als Absetzbecken ausgebildete Separator 9 zum Sedimentieren der im Reaktor 3 suspendierenden Partikel bzw. Flocken an. Der Separator 9 weist an seiner dem Reaktor 3 abgewandten Seite einen Ablauf 17 für das gereinigte Abwasser auf. Am Boden des Separators 4 sind ferner Räumeinrichtungen (nicht dargestellt) zum Austragen der sedimentierten Partikel bzw. Flocken vorgesehen.

Nachfolgend ist die Wirkungsweise der Vorrichtung 1 anhand der Reinigung von Galvanikabwässern, die neben emulgierten bzw. suspendierten organischen und anorganischen Stoffen insbesondere Schwermetalle, wie Chrom, Nickel oder dergleichen enthalten, beispielhaft erläutert.

Das zu reinigende Abwasser wird dem Elektroflotationsreaktor 2 der Vorrichtung 1 über den Zulauf 8 kontinuierlich zugeführt (Pfeil 18) und mit einer Strömungsgeschwindigkeit zwischen etwa 0,01 m/s und 0,001 m/s durch die Zwischenräume zwischen den Elektroden 4, 4a, 4b von unten nach oben geleitet, wobei zumindest im Bereich der Elektroden 4, 4a, 4b eine laminare Strömung erzielt wird. Die Elektroden 4, 4a, 4b werden mit einer Gleichspannung, insbesondere zwischen 3V und 10V, beaufschlagt, wobei die Polarität der Spannung in periodischen Zeitabständen umgekehrt wird. Alternativ ist auch eine Beaufschlagung der Elektroden 4, 4a, 4b mit einer Wechselspannung, insbesondere mit einer Spannungsamplitude zwischen etwa 3 V und 10 V, denkbar. Auf diese Weise gehen an den Anoden stets Eisenionen in Lösung (Gleichung 4), während an den Kathoden unter Freisetzung feiner Wasserstoffbläschen Hydroxyionen gebildet werden (Gleichung 5) und der pH-Wert des Abwassers somit in Strömungsrichtung erhöht wird. Durch die Wasserstoffentwicklung werden im Abwasser suspendierte Partikel in an sich bekannter Weise flotiert und gelangen an die Wasseroberfläche. Durch die stetige Erhöhung des pH-Wertes in Richtung des Strömungswegs der laminaren Strömung wird ferner ab einem gewissen Strömungsweg das Löslichkeitsprodukt des in Lösung gegangenen Eisens überschritten und werden Eisenhydroxidflocken ausgefällt, wobei aufgrund des insbesondere durch die kathodische Wasserstoffentwicklung stark reduzierenden Milieus vornehmlich Eisen(II)hydroxid ausgefällt wird. Die derart gebildeten Flocken werden ebenfalls flotiert und dienen insbesondere zur Adsorption oder Chemisorption der im Abwasser gelösten und suspendierten Verunreinigungen. Das in Lösung gegangene Eisen in Form von $Fe^{2+}$-Ionen bzw. das in Form von $Fe(OH)_2$ ausgefällte Eisen(II)hydroxid dient weiterhin insbesondere als Reduktionsmittel für Schwermetalle, z.B. $Cr^{6+}$, um diese z.B. zu $Cr^{3+}$ zu reduzieren und in Form von Hydroxiden, wie $Cr(OH)_3$, $Ni(OH)_2$ etc., in die Flocken einzulagern bzw. auszufällen.

Durch die zyklische Umkehr der Polarität der nach Art von Opferelektroden wirkenden Elektroden 4, 4a, 4b wird eine gleichmäßige Abnutzung derselben sichergestellt und gleichzeitig die Bildung passivierender Niederschläge, z. B. Eisensulfid, verhindert.

Um eine im wesentlichen konstante Stromstärke sicherzustellen, wird der Abstand der Elektroden 4 und/oder die Elektrodenspannung in Abhängigkeit von der Leitfähigkeit des Wassers automatisch eingestellt und geregelt.

Nach Durchlauf durch den Elektroflotationsreaktor'2 wird das vorgereinigte Abwasser mit den flotierten Partikeln bzw. Eisenhydroxidflocken über das Leitblech 10 in den Reaktor 3 überführt, wobei diese von anhaftenden Wasserstoffbläschen befreit und mittels des Rührwerks 11 im vorgereinigten Abwasser suspendiert werden. Um eine möglichst vollständige Ausflokkung der noch in Lösung befindlichen Eisenionen und somit eine größtmögliche Oberfläche zur Adsorption bzw. Chemisorption der Schadstoffe zu erreichen, wird im Reaktor 3 mittels der mit der Einrichtung 12 zur Messung des pH-Wertes korrespondierenden Dosiereinrichtung 13 z. B. Natronlauge zudosiert, um einen pH-Wert von etwa 9 einzustellen. Im Falle eines Überschreitens des gewünschten pH-Wertes kann mittels der ebenfalls mit der Einrichtung 12 zur Messung des pH-Wertes korrespondierenden Dosiereinrichtung 14 eine Säure zudosiert werden. Ferner können dem Reaktor 3 in bekannter Weise geringe Mengen an Flockungshilfsmitteln zugesetzt werden, die zu einer verstärkten Verknüpfung oder Vernetzung der Flocken (Flocculation) beitragen und aufgrund vollständiger Einlagerung in die Flocken mit diesen zusammen einfach aus dem gereinigten Abwasser abgetrennt werden können.

Im Falle eines Abwassers mit einem hohen Stickstoffgehalt, z. B. in Form von gelösten Nitriten, Nitraten, Aminen oder dergleichen, kann der insbesondere im Elektroflotationsreaktor 2 durch Reduktion der Stickstoffverbindungen gebildete Ammoniak im Reaktor 3 ausgestrippt werden.

Nach vollständiger Ausfällung des Eisens im Reaktor 3 wird das gereinigte Abwasser mittels des Tauchrohrs 16 in den Separator 9 überführt und nach Sedimentieren der Flocken über den Ablauf 17 ausgeleitet, z.B. in kommunale Abwassersysteme eingeleitet.

**Patentansprüche**

1. Verfahren zur Reinigung von Abwässern, wobei das Abwasser durch Elektroflotation unter Verwendung von Elektroden aus Metall, die durch anodische Auflösung Metallionen freisetzen, vorgereinigt wird, **dadurch gekennzeichnet, daß** die flotierten Partikel von anhaftenden Gasbläschen befreit und durch Eintrag von Scherkräften in dem vorgereinigten Abwasser suspendiert werden, wobei die bei der Elektroflotation in Lösung gegangenen Metallionen durch Einstellen eines basischen pH-Wertes im wesentlichen vollständig in nicht oder schwer lösliche Hydroxide überführt und ausgefällt und die hierbei gebildeten Flocken anschließend abgetrennt werden.

2. Verfahren nach Anspruch 1, **dadurch gekennzeichnet, daß** die im wesentlichen senkrecht angeordneten Elektroden mit dem Abwasser bei der Elektroflotation von unten nach oben überströmt werden.

3. Verfahren nach Anspruch 1 oder 2, **dadurch gekennzeichnet, daß** die Elektroden mit dem Abwasser laminar überströmt werden.

4. Verfahren nach Anspruch 3, **dadurch gekennzeichnet, daß** eine Strömungsgeschwindigkeit zwischen etwa 0,01 m/s und 0,001 m/s eingestellt wird.

5. Verfahren nach einem der Ansprüche 1 bis 4, **dadurch gekennzeichnet, daß** die Elektroden mit einer Spannung periodisch wechselnder Polarität beaufschlagt werden.

6. Verfahren nach einem der Ansprüche 1 bis 5, **dadurch gekennzeichnet, daß** die Elektroden mit einer Spannung zwischen 3 V und 10 V beaufschlagt werden.

7. Verfahren nach einem der Ansprüche 1 bis 6, **dadurch gekennzeichnet, daß** der Abstand der Elektroden in Abhängigkeit von der Leitfähigkeit des Abwassers automatisch variiert wird.

8. Verfahren nach einem der Ansprüche 1 bis 7, **dadurch gekennzeichnet, daß** Eisenelektroden eingesetzt werden.

9. Verfahren nach einem der Ansprüche 1 bis 8, **dadurch gekennzeichnet, daß** die den flotierten Partikeln anhaftenden Gasbläschen durch Überführen des vorgereinigten Abwassers mittels Leitblechen in einen einem Elektroflotationreaktor nachgeschalteten Reaktor entfernt werden.

10. Verfahren nach einem der Ansprüche 1 bis 9, **dadurch gekennzeichnet, daß** die flotierten Partikel in dem dem Elektroflotationsreaktor nachgeschalteten Reaktor mittels Rührern suspendiert werden.

11. Verfahren nach einem der Ansprüche 1 bis 10, **dadurch gekennzeichnet, daß** die Flocken physikalisch von dem gereinigten Abwasser abgetrennt werden.

12. Verfahren nach einem der Ansprüche 1 bis 11, **dadurch gekennzeichnet, daß** zum Überführen der bei der Elektroflotation in Lösung gegangenen Metallionen in nicht oder schwer lösliche Hydroxide und Ausfällen derselben unter Bildung von Flocken in dem dem Elektroflotationreaktor nachgeschalteten Reaktor ein pH-Wert zwischen 7,5 und 9,5 eingestellt wird.

13. Verfahren nach einem der Ansprüche 1 bis 12, **dadurch gekennzeichnet, daß** bei der Elektroflotation eine in situ-Oxidation des Abwassers durch Zusetzen von Wasserstoffperoxid durchgeführt wird.

14. Verfahren nach einem der Ansprüche 1 bis 13, **dadurch gekennzeichnet, daß** es kontinuierlich durchgeführt wird.

15. Vorrichtung (1) zur Reinigung von Abwässern, insbesondere zur Durchführung des Verfahrens nach einem der Ansprüche 1 bis 14, mit einem Elektroden (4, 4a, 4b) aus Metall aufweisenden Elektroflotationsreaktor (2), **dadurch gekennzeichnet, daß** ein dem Elektroflotationsreaktor (2) nachgeschalteter Reaktor (3) wenigstens ein Rührwerk (11), eine Einrichtung (12) zur Messung des pH-Wertes sowie wenigstens eine Dosiereinrichtung (13, 14), insbesondere zum Dosieren von Basen, aufweist und daß der dem Elektroflotationsreaktor (2) nachgeschaltete Reaktor (3) über oberhalb seines Flüssigkeitsspiegels angeordnete Leitbleche (10) mit dem Elektroflotationsreaktor (2) verbunden ist.

16. Vorrichtung nach Anspruch 15, **dadurch gekennzeichnet, daß** der Elektroflotationsreaktor (2) im wesentlichen senkrecht angeordnete Elektroden (4, 4a, 4b) und einen im unteren Bereich, insbesondere unterhalb der Elektroden (4, 4a, 4b) angeordneten Zulauf (8) für das Abwasser aufweist.

17. Vorrichtung nach Anspruch 15 oder 16, **dadurch gekennzeichnet, daß** die Elektroden (4, 4a, 4b) Eisen enthalten.

18. Vorrichtung nach einem der Ansprüche 15 bis 17, **dadurch gekennzeichnet, daß** die Elektroden (4, 4a, 4b) aus Eisen bestehen.

19. Vorrichtung nach einem der Ansprüche 15 bis 18, **dadurch gekennzeichnet, daß** eine Spannungsquelle mit periodisch wechselnder Polarität zur Beaufschlagung der Elektroden (4, 4a, 4b) vorgesehen ist.

20. Vorrichtung nach einem der Ansprüche 15 bis 19, **dadurch gekennzeichnet, daß** im Zulauf (8) und/oder im unteren Bereich des Elektroflotationsreaktors (2) eine Leitfähigkeitsmeßeinrichtung vorgesehen ist.

21. Vorrichtung nach einem der Ansprüche 15 bis 20, **dadurch gekennzeichnet, daß** der Abstand der Elektroden (4, 4a, 4b) des Elektroflotationsreaktors (2) veränderbar ist.

22. Vorrichtung nach Anspruch 20 und 21, **dadurch gekennzeichnet, daß** ein mit der Leitfähigkeitsmeßeinrichtung korrespondierender Stellantrieb zum automatischen Einstellen des Abstandes der Elektroden (4, 4a, 4b) in Abhängigkeit von der Leitfähigkeit des Abwassers vorgesehen ist.

23. Vorrichtung nach einem der Ansprüche 15 bis 22, **dadurch gekennzeichnet, daß** ein an den dem Elektroflotationsreaktor (2) nachgeschalteten Reaktor (3) anschließender Separator (9) zur physikalischen Abtrennung der Flocken von dem gereinigten Abwasser vorgesehen ist.

24. Vorrichtung nach Anspruch 23, **dadurch gekennzeichnet, daß** der Separator (9) mittels wenigstens eines Steigrohrs (16) mit dem dem Elektroflotationsreaktor (2) nachgeschalteten Reaktor (3) verbunden ist.

25. Vorrichtung nach Anspruch 23 oder 24, **dadurch gekennzeichnet, daß** der Separator (9) ein Absetzbecken ist.

26. Vorrichtung nach Anspruch 23 oder 24, **dadurch gekennzeichnet, daß** der Separator (9) ein Dekanter, insbesondere ein Lamellendekanter, ist.

27. Vorrichtung nach Anspruch 23 oder 24, **dadurch gekennzeichnet, daß** der Separator (9) eine Zentrifuge ist.

28. Vorrichtung nach Anspruch 23 oder 24, **dadurch gekennzeichnet, daß** der Separator (9) ein Filter oder eine Filterpresse ist.

29. Vorrichtung nach Anspruch 23 oder 24, **dadurch gekennzeichnet, daß** der Separator (9) ein Hydrozyklon ist.

Fig. 1

Fig. 2